# EUROPÄISCHE PATENTANMELDUNG

(11) **EP 4 183 506 A1**
(43) Veröffentlichungstag der Anmeldung: **24.05.2023**
(21) Anmeldenummer: 21209638.2
(22) Anmeldetag: 22.11.2021
(51) Int. Cl.: B23B 45/02, B25B 21/00, B25F 5/00

(54) **ZYKLISCHE REDUNDANZPRÜFUNG FÜR EIN KOMMUNIKATIONSVERFAHREN**

(71) Anmelder: Hilti Aktiengesellschaft, 9494 Schaan (LI)
(72) Erfinder: Mayer, Stefan, 86857 Hurlach (DE); Hauser, Klaus, 86830 Schwabmünchen (DE); Koscheck, David, 86899 Landsberg (DE)
(74) Vertreter: Hilti Aktiengesellschaft Corporate Intellectual Property

(57) **Zusammenfassung**

Verfahren für eine Kommunikation zwischen einem ersten Teilnehmer mit einem ersten Transceiver und einem zweiten Teilnehmer mit einem zweiten Transceiver, mit den Verfahrensschritten:
- Aussenden wenigstens eines ersten Signals von dem ersten Transceiver zu dem zweiten Transceiver, wobei das Signal wenigstens einen ersten Bestandteil eines Datensatzes sowie einen zweiten Bestandteil eines Datensatzes enthält;
- Aussenden eines zweiten Signals von dem zweiten Transceiver an den ersten Transceiver, wenn nach Bestimmen einer Prüfsumme kein Fehler in dem ersten Bestandteil des ersten ausgesendeten und empfangenen Signals feststellbar ist;
- Aussenden des ersten Signals von dem ersten Transceiver zu dem zweiten Transceiver, wenn nach Ablauf einer ersten vorbestimmten Zeitdauer kein zweites Signal von dem ersten Transceiver empfangen wurde;
- Einstellen des ersten Teilnehmers von einem ersten Betriebszustand in einen zweiten Betriebszustand, wenn nach einer zweiten vorbestimmten Zeitdauer kein erstes Signal von dem ersten Transceiver empfangen wird oder wenn nach einer dritten vorbestimmten Zeitdauer kein zweiten Signals von dem ersten Transceiver empfangen wird; und/oder
- Aussenden eines vierten Signals von dem ersten Transceiver an den zweiten Transceiver zum Einstellen des zweiten Teilnehmers von einem ersten Betriebszustand in einen zweiten Betriebszustand, wenn nach einer zweiten vorbestimmten Zeitdauer kein erstes Signal von dem zweiten Transceiver empfangen wird oder wenn nach einer dritten vorbestimmten Zeitdauer kein zweiten Signals von dem ersten Transceiver empfangen wird.

System zur Durchführung eines Verfahrens für eine Kommunikation zwischen einem ersten und zweiten Teilnehmer.

## Beschreibung

Die vorliegende Erfindung betrifft ein Verfahren für eine Kommunikation zwischen einem ersten Teilnehmer mit einem ersten Transceiver und einem zweiten Teilnehmer mit einem zweiten Transceiver, wobei der erste Teilnehmer beispielsweise in Form eines Akkumulators und der zweite Teilnehmer beispielsweise in Form einer Werkzeugmaschine oder einer Ladevorrichtung ausgestaltet ist, und wobei der Akkumulator wahlweise wiederlösbar mit der Werkzeugmaschine oder Ladevorrichtung verbindbar ist.

Des Weiteren betrifft die vorliegende Erfindung ein System zur Durchführung ein Verfahren für eine Kommunikation zwischen einem ersten und zweiten Teilnehmer.

Für die Versorgung einer elektrisch betriebenen Werkzeugmaschine mit elektrischer Energie wird oftmals ein Akkumulator oder auch mehrere Akkumulatoren wiederlösbar mit der Werkzeugmaschine verbunden, sodass die im Inneren des Akkumulators angeordneten Energiespeicherzellen (auch Akku-Zellen genannt) eine gespeicherte elektrische Energie an entsprechende Verbraucher der Werkzeugmaschine abgeben können. Bei den Verbrauchern kann es sich um den Antrieb der Werkzeugmaschine, eine Steuerungsvorrichtung, ein Zusatzaggregat (wie beispielsweise eine Lampe) oder dergleichen handeln. Eine Vorrichtung für eine derartige Verbindung zwischen der Werkzeugmaschine und dem Akkumulator besteht dabei zum einen aus mechanischen Anbindungskomponenten sowie aus elektrischen Anschlüssen. Eine derartige Verbindungsvorrichtung wird dabei in Form einer an der Werkzeugmaschine angeordneten Schnittstelle oder Schnittstellenvorrichtung sowie in Form einer an dem Akkumulatoren angeordneten und korrespondierenden Schnittstelle oder Schnittstellenvorrichtung ausgestaltet.

Die entsprechenden elektrischen Anschlüssen sowohl der Werkzeugmaschine als auch des Akkumulators sind dabei für gewöhnlich als wiederlösbare Steckverbindungen in dem jeweiligen Plus- bzw. Minuspfaden der elektrischen Energieversorgung vorgesehen, sodass hierdurch der Plus- und Minuskontakt des Akkumulators mit den entsprechenden Plus- und Minuskontakten der Verbraucher der Werkzeugmaschine in Verbindung stehen.

Die mechanischen Komponenten können beispielsweise in Form eines Schienensystems oder einer Steckverbindung ausgestaltet sein, mit deren Hilfe der Akkumulator auf die als Schnittstelle ausgestaltete Verbindungsvorrichtung an der Werkzeugmaschine geschoben und auch wieder entnommen werden kann. Durch das Aufschieben des Akkumulators an die Werkzeugmaschine verbinden sich die Anschlüsse (d.h. die entsprechenden Plus- und Minuskontakte) des Akkumulators mit den korrespondierenden Anschlüssen der Werkzeugmaschine, sodass die in dem Akkumulator gespeicherte elektrische Energie zu den Verbrauchern der Werkzeugmaschine gelangen kann.

Zusätzlich zu den mechanischen Anbindungskomponenten und den elektrischen Anschlüssen weist die Verbindungsvorrichtung zwischen der Werkzeugmaschine und dem Akkumulator häufig auch eine Datenverbindung auf. Die Datenverbindung dient dabei zum Übermitteln bzw. Austauschen von Daten und Informationen in Form von elektrischen Signalen zwischen der Werkzeugmaschine und dem Akkumulator. Zur Übermittlung bzw. für den Austausch von Signalen weist die Datenverbindung einen Transceiver auf Seiten der Werkzeugmaschine und eine korrespondierenden Transceiver auf Seiten des Akkumulators auf. Jeder Transceiver ist dabei in der Lage Signale zu empfangen und zu senden.

Zu den Daten und Informationen, die beispielsweise von dem Akkumulator an die Werkzeugmaschine geschickt werden können, kann beispielsweise der SOC (State of Charge = Ladezustand) oder SOH (State of Health = Gesundheitszustand) des Akkumulators gehören. Zu den Daten und Informationen, die beispielsweise von der Werkzeugmaschine an den Akkumulator geschickt werden können, kann der Wert der elektrischen Spannung oder Stromstärke gehören.

Eine exakte und vor allem verlässliche Verbindung zwischen der Werkzeugmaschine und dem Akkumulator stellt oftmals eine gewisse Herausforderung dar, wobei insbesondere ein harter und durch zahlreiche mechanische Belastungen geprägter Anwendungsbereich eine zusätzliche Herausforderung für die Verbindung darstellt.

Zum einen müssen die mechanischen Komponenten sowie die elektrischen Anschlüsse in ihrer Ausgestaltung eine relativ einfache Handhabung gewährleisten, sodass ein möglichst unkompliziertes Anbringen sowie erneutes Entfernen des Akkumulators an bzw. von der Werkzeugmaschine gegeben ist.

Zum anderen müssen die mechanischen Komponenten sowie elektrischen Anschlüsse relativ robust sein, damit diese den Bewegungen, Vibrationen und Erschütterungen während der Verwendung der Werkzeugmaschine mit dem angeschlossenen Akkumulator standhalten können.

Selbst eine kurzzeitige oder auch vorübergehende Unterbrechung der Verbindung zwischen der Werkzeugmaschine mit dem Akkumulator ist generell unerwünscht und gilt es zu vermeiden.

Eine Unterbrechung der Verbindung kann dabei zu einer diskontinuierlichen Versorgung der Werkzeugmaschine mit elektrischer Energie aus dem Akkumulator führen, sodass der Elektromotor der Werkzeugmaschine nicht mehr gleichmäßig und/oder nur noch mit verringerter Drehzahl dreht. Dies kann beispielsweise wiederum zu Leistungsschwankungen am Elektromotor führen, sodass kein gleichmäßiges oder lediglich ein zu geringes Drehmoment von dem Elektromotor erzeugt wird. Leistungs- bzw. Drehzahlschwankungen, die eine verringerte Drehmomentausgabe des Elektromotors erzeugen, führen schließlich zu einem ineffizienten Arbeiten der Werkzeugmaschine.

Des Weiteren kann eine derartige Unterbrechung der Energieversorgung auch auf eine Fehlfunktion des Akkumulators hindeuten. Fehlfunktion des Akkumulators sind stets zu beachten, da diese letztendlich zu einem Komplettversagen bzw. Totalausfall des Akkumulators führen können.

Eine Unterbrechung der Verbindung zwischen der Werkzeugmaschine und dem Akkumulator kann dabei auch zu einer Störung oder Komplettunterbrechung der Datenübertragung führen. Hierdurch kann es zu Fehlfunktionen bzw. Störungen an der Werkzeugmaschine und/oder an dem Akkumulator kommen.

Aufgabe der vorliegenden Erfindung ist es daher das vorstehend beschriebene Problem zu lösen sowie frühestmöglich und verlässlich zu detektieren, ob eine Störung in der Verbindung zwischen der Werkzeugmaschine und dem Akkumulator vorliegt, die zu einer unerwünschten Fehlfunktion führen kann. Darüber hinaus sollen entsprechende Maßnahmen ergriffen werden, um einen sicheren Zustand an der Werkzeugmaschine und/oder an dem Akkumulator einzustellen.

Die Aufgabe wird gelöst durch den Gegenstand des Anspruchs 1 sowie durch den Gegenstand des Anspruchs 5. Vorteilhafte Ausgestaltungsformen sind in den abhängigen Ansprüchen aufgeführt.

Die Aufgabe dabei insbesondere gelöst durch ein Verfahren für eine Kommunikation zwischen einem ersten Teilnehmer mit einem ersten Transceiver und einem zweiten Teilnehmer mit einem zweiten Transceiver, wobei der erste Teilnehmer beispielsweise in Form eines Akkumulators und der zweite Teilnehmer beispielsweise in Form einer Werkzeugmaschine oder einer Ladevorrichtung ausgestaltet ist, und wobei der Akkumulator wahlweise wiederlösbar mit der Werkzeugmaschine oder Ladevorrichtung verbindbar ist.

Erfindungsgemäß enthält das Verfahren die Verfahrensschritte
- Aussenden wenigstens eines ersten Signals von dem ersten Transceiver zu dem zweiten Transceiver, wobei das Signal wenigstens einen ersten Bestandteil eines Datensatzes sowie einen zweiten Bestandteil eines Datensatzes enthält;
- Aussenden eines zweiten Signals von dem zweiten Transceiver an den ersten Transceiver, wenn nach Bestimmen einer Prüfsumme kein Fehler in dem ersten Bestandteil des ersten ausgesendeten und empfangenen Signals feststellbar ist;
- Aussenden des ersten Signals von dem ersten Transceiver an den zweiten Transceiver, wenn nach Ablauf einer ersten vorbestimmten Zeitdauer kein zweites Signal von dem ersten Transceiver empfangen wird;
- Einstellen des ersten Teilnehmers von einem ersten Betriebszustand in einen zweiten Betriebszustand, wenn nach einer zweiten vorbestimmten Zeitdauer kein erstes Signal von dem zweiten Transceiver empfangen wird oder wenn nach einer dritten vorbestimmten Zeitdauer kein zweites Signal von dem ersten Transceiver empfangen wird; und/oder
- Aussenden eines dritten Signals von dem ersten Transceiver an den zweiten Transceiver zum Einstellen des zweiten Teilnehmers von einem ersten Betriebszustand in einen zweiten Betriebszustand, wenn nach einer zweiten vorbestimmten Zeitdauer kein erstes Signal von dem zweiten Transceiver empfangen wird oder wenn nach einer dritten vorbestimmten Zeitdauer kein zweiten Signals von dem ersten Transceiver empfangen wird.

Mit Hilfe der zu bestimmenden Prüfsumme (auch Prüfwert genannt) können eventuell auftretende Fehler bei der Signalübertragung erkannt werden.

Der erste und/oder zweite Transceiver kann auch als Kommunikationsmodul oder Sendeempfänger bezeichnet werden.

Das zweite Signal kann auch als Bestätigungssignal oder Quittierungssignal bezeichnet werden, durch welches dem ersten Teilnehmer bestätigt wird, dass nach Bestimmen einer Prüfsumme kein Fehler in dem ersten Bestandteil des ersten Signals feststellbar ist.

Es ist zu beachten, dass wenn nach Ablauf einer ersten vorbestimmten Zeitdauer kein zweites Signal von dem ersten Transceiver empfangen wird, das erste Signal von dem ersten Teilnehmer an den zweiten Teilnehmer erneut ausgesendet wird. Das erneut ausgesendete erste Signal ist dabei identisch zu dem ersten Signal, welche bereits und zuvor von dem ersten Teilnehmer an den zweiten Teilnehmer ausgesendet wurde.

Bei dem ersten Betriebszustand kann es sich dabei um einen Aktivierungsmodus oder Aktivierungszustand und bei dem zweiten Betriebszustand kann es sich dabei um einen Deaktivierungsmodus oder Deaktivierungszustand handeln. Alternativ kann es sich bei dem ersten Betriebszustand um einen Zustand oder Modus eines Teilnehmers handeln, bei dem eine Anzahl an Funktionen aktiviert ist. Im Gegensatz kann es sich bei dem zweiten Betriebszustand um einen Zustand oder Modus eines Teilnehmers handeln, bei dem eine geringere Anzahl an Funktionen aktiviert ist als in dem ersten Betriebszustand.

Gemäß einer vorteilhaften Ausführungsform der vorliegenden Erfindung kann der Verfahrensschritt enthalten sein: Speichern der Anzahl an von dem zweiten Transceiver empfangenen Signalen, bei denen bei einem Bestimmen einer Prüfsumme ein Fehler in dem ersten Bestandteil des ersten ausgesendeten und empfangenen Signals feststellbar ist.

Das Speichern derartiger Signale kann mit Hilfe der Speichereinrichtung gespeichert werden. Die Speichereinrichtung kann Bestandteil einer Steuereinrichtung eines der Teilnehmer sein. Des Weiteren kann eine Speichereinrichtung auch Bestandteil einer Steuerungseinrichtung eines weiteren Teilnehmers sein.

Gemäß einer alternativen Ausführungsform kann es möglich sein, dass erst nach einer vorbestimmten Anzahl an von dem zweiten Transceiver empfangenen Signalen, bei denen nach Bestimmen einer Prüfsumme ein Fehler in dem ersten Bestandteil des ersten Signals feststellbar ist, und dem Ausbleiben des Empfangens des zweiten Signals durch den ersten Transceiver nach einer vorbestimmten vierten Zeitdauer der erste Teilnehmer von einem ersten in einen zweiten Betriebszustand eingestellt wird.

Alternativ oder zusätzlich hierzu kann auch durch das Aussenden eines entsprechenden Signals von dem ersten Teilnehmer an den zweiten Teilnehmer der zweite Teilnehmer von einem ersten in einen zweiten Betriebszustand eingestellt werden.

Entsprechend einer vorteilhaften Ausführungsform der vorliegenden Erfindung kann es möglich sein, dass eine zyklische Redundanzprüfung zum Bestimmen einer Prüfsumme verwendbar ist.

Gemäß einer vorteilhaften Ausführungsform der vorliegenden Erfindung kann es möglich sein, dass der erste Bestandteil des Datensatzes in Form von Nutzdaten und der zweite Bestandteil des Datensatzes in Form einer Redundanz ausgestaltet ist.

Die Nutzdaten können dabei auch nur als Daten bezeichnet werden. Die Redundanz kann dabei auch als CRC-Wert, d.h. cyclic redundancy ceck-Wert oder als Prüfbits bezeichnet werden. Entsprechend einer weiteren vorteilhaften Ausführungsform der vorliegenden Erfindung kann es möglich sein, dass es sich bei dem ersten Betriebszustand um einen Aktivierungsmodus und bei dem zweiten Betriebszustand um einen Deaktivierungsmodus handelt.

Bei dem Aktivierungsmodus der Werkzeugmaschine bzw. des Akkumulators handelt es sich um einen Zustand, bei dem wenigstens eine Funktion der Werkzeugmaschine bzw. des Akkumulators aktiviert ist. Bei der wenigstens einen Funktion der Werkzeugmaschine kann es sich um den Betrieb eines Antriebs der Werkzeugmaschine handeln zum Erzeugen eines Drehmoments.

Des Weiteren kann es sich bei der wenigstens einen Funktion des Akkumulators um das Bereitstellen der in dem Akkumulator gespeicherten elektrischen Energie handeln.

Bei dem Deaktivierungsmodus der Werkzeugmaschine bzw. des Akkumulators handelt es sich um einen Zustand, bei dem sämtliche Funktionen der Werkzeugmaschine bzw. des Akkumulators deaktiviert sind. Durch die Deaktivierung aller Funktionen der Werkzeugmaschine ist z.B. auch der Betrieb des Antriebs der Werkzeugmaschine zum Erzeugen eines Drehmoments wenigstens zeitweise oder dauerhalft unterbrochen. Die Deaktivierung aller Funktionen des Akkumulators führt zu einer wenigstens zeitweisen oder dauerhaften Unterbrechung des Bereitstellens der in dem Akkumulator gespeicherten elektrischen Energie.

Bei der Kommunikation zwischen der Werkzeugmaschine und dem Akkumulator kann es sich um eine bidirektionalen oder um eine monodirektionale bzw. unidirektionale Kommunikation handeln. Bei der bidirektionalen Kommunikation können Signale, Daten und Informationen zwischen der Werkzeugmaschine und dem Akkumulator ausgetauscht werden. Im Gegensatz dazu werden bei einer monodirektionalen bzw. unidirektionalen Kommunikation Signale, Daten und Informationen lediglich von dem Akkumulator zu der Werkzeugmaschine oder von der Werkzeugmaschine zu dem Akkumulator gesendet.

Entsprechend einer vorteilhaften Ausführungsform der vorliegenden Erfindung kann es möglich sein, dass der Verfahrensschritt enthalten ist:
- Aussenden eines Signals mit einem Synchronisationsmuster von dem ersten Transceiver an den zweiten Transceiver zum Anpassen der Übertragungsrate für die Kommunikation zwischen dem wenigstens ersten und zweiten Transceiver.

Die Übertragungsrate für die Kommunikation zwischen dem wenigstens ersten und zweiten Transceiver kann dabei auch als "baud rate" bezeichnet werden.

Des Weiteren wird die Aufgabe gelöst durch ein System zur Durchführung des erfindungsgemäßen Verfahrens für eine Kommunikation zwischen einem ersten und zweiten Teilnehmer, wobei der erste Teilnehmer eine Steuerungseinrichtung und wenigstens einem ersten Transceiver und der zweite Teilnehmer eine Steuereinrichtung und wenigstens einem zweiten Transceiver enthält, wobei in einem verbundenen Zustand Signale zwischen dem ersten und zweiten Transceiver übermittelbar sind.

Entsprechend einer vorteilhaften Ausführungsform der vorliegenden Erfindung kann es möglich sein, dass die Kommunikation zwischen dem ersten und zweiten Teilnehmer auf einer drahtlosen Datenübertragungstechnologie basiert. Die

Bei der drahtlosen Datenübertragungstechnologie kann es sich um eine Bluetooth, WLAN, ZigBee, NFC (Near Field Communication), Wibree oder WiMAX im Radiofrequenzbereich sowie IrDA (Infrared Data Association), optischer Richtfunk (FSO) und Li-Fi (light fidelity) im infraroten bzw. optischen Frequenzbereich handeln.

Durch die drahtlose Datenübertragungstechnologie kann ein Datenaustausch auch ermöglicht werden, wenn der erste und zweite Teilnehmer der Kommunikation nicht unmittelbar in Kontakt stehen bzw. physisch miteinander verbunden sind.

Gemäß einer weiteren vorteilhaften Ausführungsform der vorliegenden Erfindung kann es möglich sein, dass die Kommunikation zwischen dem ersten und zweiten Teilnehmer auf einer drahtgebundenen Datenübertragungstechnologie basiert. Hierdurch ist ein relativ robuster und weitestgehend störfreier Datenaustausch gewährleistet.

Entsprechend einer weiteren vorteilhaften Ausführungsform der vorliegenden Erfindung kann es möglich sein, dass der erste Teilnehmer in Form eines Akkumulators und der zweite Teilnehmer in Form einer von dem Akkumulator mit elektrischer Energie versorgten Werkzeugmaschine ausgestaltet ist.

Gemäß einer weiteren vorteilhaften Ausführungsform der vorliegenden Erfindung kann es möglich sein, dass der erste Teilnehmer in Form eines Akkumulators und der zweite Teilnehmer in Form einer Ladevorrichtung zum Versorgen des Akkumulators mit elektrischer Energie ausgestaltet ist.

Des Weiteren kann es gemäß einer weiteren vorteilhaften Ausführungsform der vorliegenden Erfindung kann es möglich sein, dass der erste Teilnehmer in Form eines ersten Akkumulators und der zweite Teilnehmer in Form eines zweiten Akkumulators ausgestaltet ist.

Alternativ kann es sich bei dem ersten Teilnehmer um eine erste Werkzeugmaschine und bei dem zweiten Teilnehmer um eine zweite Werkzeugmaschine handeln.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine schematische Seitenansicht auf ein erfindungsgemäßes System mit einer Werkzeugmaschine und einem mit der Werkzeugmaschine verbundenen Akkumulator;
- Figur 2: eine perspektivische Ansicht auf den Akkumulator mit einer Akku-Schnittstelle;
- Figur 3: eine perspektivische Ansicht auf eine Fussvorrichtung der Werkzeugmaschine mit einer Werkzeugmaschine-Schnittstelle;
- Figur 4: eine perspektivische Ansicht auf einen Handgriff der Werkzeugmaschine zusammen mit der Fussvorrichtung und den Akkumulator mit der Akku-Schnittstelle; und
- Figur 5: schematische Darstellung eines Signals mit einen ersten Bestandteil eines Datensatzes sowie einen zweiten Bestandteil eines Datensatzes.

### Ausführungsbeispiele:

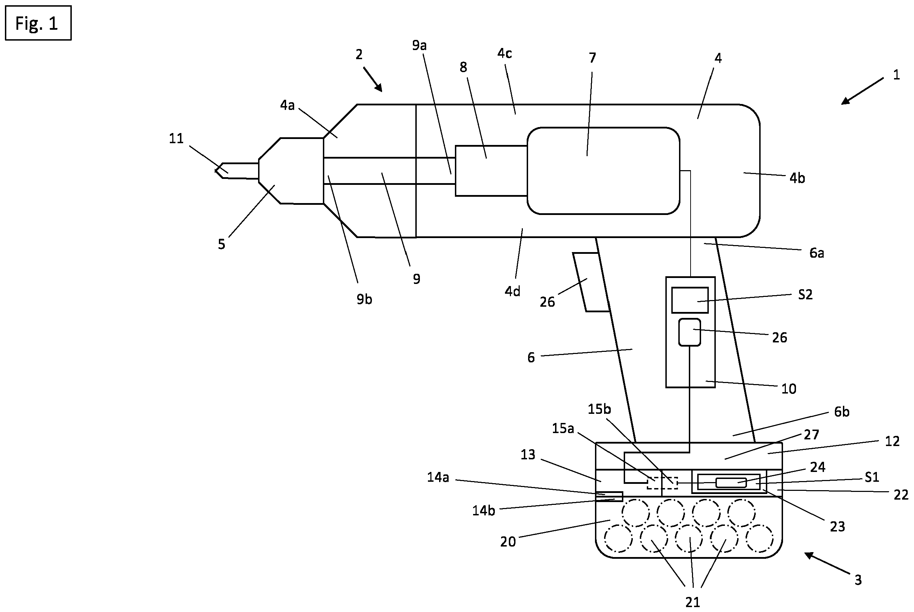

Ein bevorzugtes Ausführungsbeispiel eines erfindungsgemäßen Systems 1 mit einer Werkzeugmaschine 2 und einem mit der Werkzeugmaschine 2 verbundenen Akkumulator 3 ist in Figur 1 dargestellt. Der Akkumulator 3 ist dabei wiederlösbar mit der Werkzeugmaschine 2 verbunden und dient zur Versorgung der Werkzeugmaschine 2 mit elektrischer Energie.

Die Werkzeugmaschine 2 in dem vorliegenden Ausführungsbeispiel ist in Form eines Akku-Schraubers ausgestaltet. Gemäß einer alternativen Ausgestaltungsform kann die Werkzeugmaschine 2 auch in Form eines Bohrhammers, einer Bohrmaschine, einer Säge, eines Schleifgeräts oder dergleichen ausgestaltet sein.

Die Werkzeugmaschine 2 enthält dabei im Wesentlichen ein Gehäuse 4, eine Werkzeugaufnahme 5 sowie einen Handgriff 6.

Das Gehäuse 4 der Werkzeugmaschine 2 enthält wiederum ein vorderes Ende 4a, ein hinteres Ende 4b, ein Oberseite 4c sowie eine Unterseite 4d. Wie in Figur 1 angedeutet, ist in dem Inneren des Gehäuses 4 ein Antrieb 7, ein Getriebevorrichtung 8, ein Abtriebswelle 9 und eine Steuereinrichtung 10 positioniert. Darüber hinaus ist eine erste Speichereinrichtung S1 vorgesehen, die zum Speicher und Bereitstellen von Informationen und Daten dient.

Der Antrieb 7 ist dabei als bürstenloser Elektromotor ausgestaltet. Alternativ kann der Antrieb 7 auch als Elektromotor mit Kohlebürsten ausgestaltet sein.

Der als bürstenloser Elektromotor ausgestaltete Antrieb 7 dient zum Erzeugen eines Drehmoments. Der Antrieb 7 ist so mit der Getriebevorrichtung 8 verbunden, dass das vom Antrieb 7 erzeugte Drehmoment auf die Getriebevorrichtung 8 übertragen wird. Die Antriebswelle 9 enthält ein erstes Ende 9a und ein zweites Ende 9b. Die Getriebevorrichtung 8 ist wiederum mit dem ersten Ende 9a der Antriebswelle 9 verbunden, sodass das von dem Antrieb 7 erzeugte Drehmoment auf die Antriebswelle 9 übertragen wird. Das zweite Ende 9b der Antriebswelle 9 ist mit der Werkzeugaufnahme 5 so verbunden, dass das Drehmoment der Antriebswelle 9 auf die Werkzeugaufnahme 5 übertragen wird. Die Werkzeugaufnahme 5 dient zum Aufnehmen und Halten eines Werkzeugs 11. In dem vorliegenden Ausführungsbeispiel ist das Werkzeug 11 als Schrauber-Bit ausgestaltet. Mit Hilfe des auf die Werkzeugaufnahme 11 übertragenen Drehmoments wird schließlich das Drehmoment auf das als Schrauber-Bit ausgestaltete Werkzeug 11 übertragen.

Der Handgriff 6 enthält ein erstes Ende 6a sowie ein zweites Ende 6b und dient zum Halten und Führen der Werkzeugmaschine 2 durch einen Anwender. Der Anwender ist in den Figuren nicht dargestellt. Das erste Ende 6a des Handgriffs 6 ist an der Unterseite 4d des Gehäuses 4 der Werkzeugmaschine 2 angeordnet. An dem zweiten Ende 6b des Handgriffs 6 ist mit einer Fussvorrichtung 12 verbunden. An der Fussvorrichtung 12 ist eine Werkzeugmaschine-Schnittstelle 13 enthalten. Die Werkzeugmaschinen-Schnittstelle 13 dient als Anschluss- bzw. Verbindungsmöglichkeit für den Akkumulator 3.

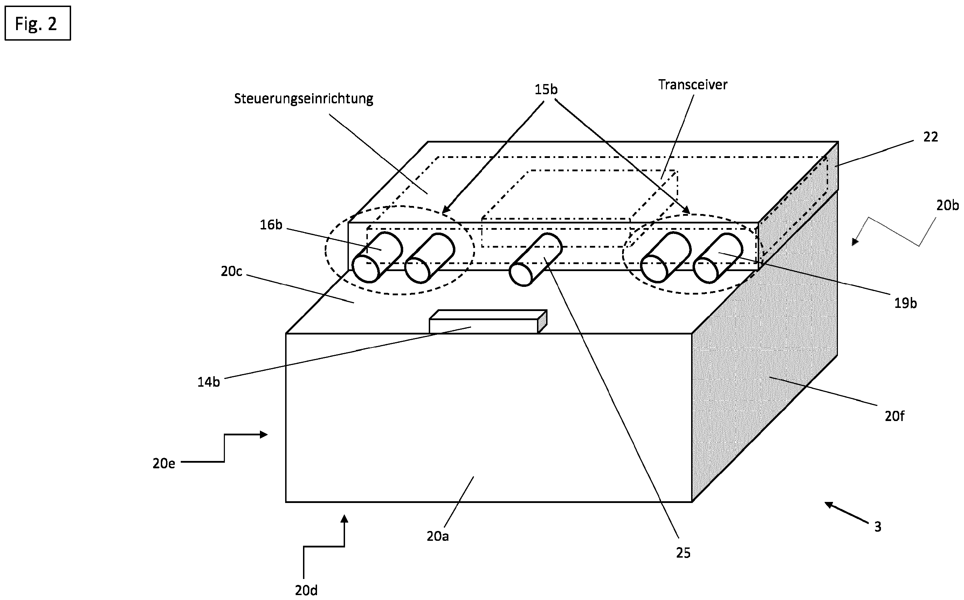

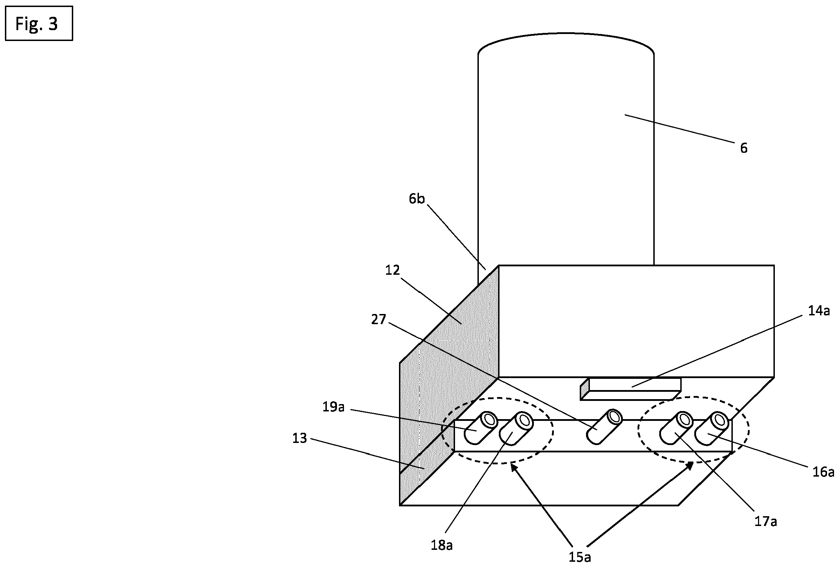

Wie in den Figuren 2 und 3 ersichtlich, enthält die Werkzeugmaschine-Schnittstelle 13 eine mechanische Anbindungskomponente 14a sowie elektrische Anschlüsse 15a. Die mechanische Anbindungskomponente 14a ist dabei in Form eines Verriegelungselements ausgestaltet. Die elektrischen Anschlüssen 15a sind wiederum in Form eines ersten und zweiten Pluskontakts 16a, 17a sowie eines ersten und zweiten Minuskontakts 18a, 19a ausgestaltet. Gemäß einer alternativen Ausführungsform kann es auch möglich sein, dass mehr oder weniger als zwei Pluskontakte und mehr oder weniger als zwei Minuskontakte an der Werkzeugmaschine-Schnittstelle 13 vorgesehen sind.

In Figur 2 ist eine erste Ausführungsform des Akkumulators 3 dargestellt. Der Akkumulator 3 enthält ein Akkugehäuse 20, eine Anzahl an Energiespeicherzellen 21, eine Akku-Schnittstelle 22 und eine Steuerungseinrichtung 23.

Im Inneren des Akkugehäuses 20 sind die Energiespeicherzellen 21 und die Steuerungseinrichtung 23 positioniert. Darüber hinaus ist eine zweite Speichereinrichtung S2 vorgesehen, die zum Speicher und Bereitstellen von Informationen und Daten dient.

Die Steuerungseinrichtung 23 dient zum Steuern und Regeln der verschiedenen Funktionen des Akkumulators 3. Zu den Funktionen des Akkumulators 3 gehören beispielsweise die Abgabe einer bestimmten Menge an elektrischer Energie, die Stromstärke oder dergleichen.

Das Akkugehäuse 20 enthält eine Vorderseite 20a, eine Rückseite 20b, eine Oberseite 20c, eine Unterseite 20d, eine linke Seitenwand 20e und eine rechte Seitenwand 20f. An der Oberseite 20c ist die Akku-Schnittstelle 22 positioniert.

Die Akku-Schnittstelle 22 ist korrespondierend zu der Werkzeugmaschine-Schnittstelle 13 ausgestaltet, sodass die Akku-Schnittstelle 22 und die Werkzeugmaschine-Schnittstelle 13 wiederlösbar miteinander verbunden werden können. Die Akku-Schnittstelle 13 enthält hierzu ebenfalls eine mechanische Anbindungskomponente 14b sowie elektrische Anschlüsse 15b. Ebenso wie bei der Werkzeugmaschine-Schnittstelle 13 ist die mechanische Anbindungskomponente 14b des Akkumulators 3 ist in Form eines Verriegelungselements ausgestaltet.

Die elektrischen Anschlüssen 14b der Akku-Schnittstelle 22 sind wiederum in Form eines ersten und zweiten Pluskontakts 16b, 17b sowie eines ersten und zweiten Minuskontakts 18b, 19b ausgestaltet. Gemäß einer alternativen Ausführungsform kann es auch möglich sein, dass mehr oder weniger als zwei Pluskontakte und mehr oder weniger als zwei Minuskontakte an der Akku-Schnittstelle 13 vorgesehen sind.

Das Verriegelungselement 14b der Akku-Schnittstelle 22 korrespondiert dabei mit dem Verriegelungselement 14a der Werkzeugmaschine-Schnittstelle 13, sodass die beiden Verriegelungselemente 14a, 14b wiederlösbar miteinander formschlüssig verbunden werden können. Alternativ kann die Verbindung der beiden Verriegelungselemente 14a, 14b auch kraftschlüssig ausgestaltet sein.

Gemäß einer alternativen Ausgestaltungsform kann die mechanische Anbindungskomponente 14a an der Werkzeugmaschine-Schnittstelle 13 sowie entsprechend an der Akku-Schnittstelle 22 auch als eine Schienenvorrichtung für eine wiederlösbare formschlüssige Anbindung des Akkumulators 3 an der Werkzeugmaschine 2 ausgestaltet sein.

Wie in Figur 1 angedeutet, enthält die Steuerungseinrichtung 23 des Akkumulators 3 einen ersten Transceiver 24. Der erste Transceiver 24 dient zum Senden und Empfangen von Daten und Informationen in Form von elektrischen Signalen.

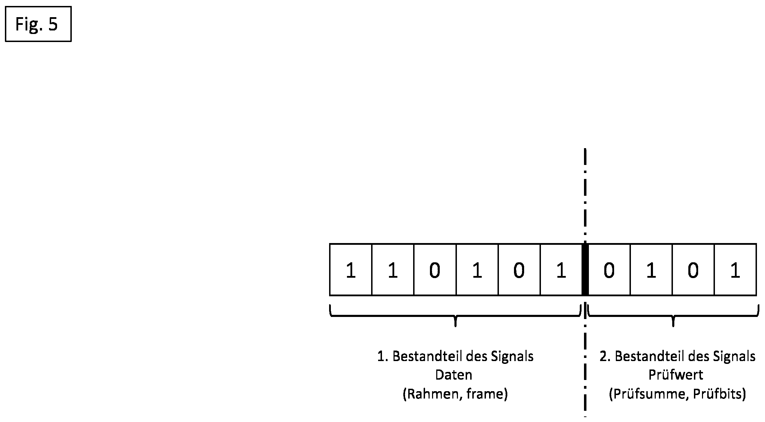

Figur 5 zeigt eine schematische Darstellung der Bestandteile eines elektrischen Signals. Das Signal besteht dabei aus einem ersten Bestandteil B1 und einem zweiten Bestandteil B2. Der erste Bestandteil B1 des Datensatzes ist dabei in Form von Nutzdaten und der zweite Bestandteil B2 des Datensatzes in Form einer Redundanz ausgestaltet.

Entsprechend einer alternativen Ausführungsform kann der erste Transceiver 24 auch an einer andere geeigneten Stelle des Akkumulators 3 positioniert sein und durch eine entsprechende Leitung mit der Steuerungseinrichtung 23 zum Austausch von Signalen und Daten verbunden sein.

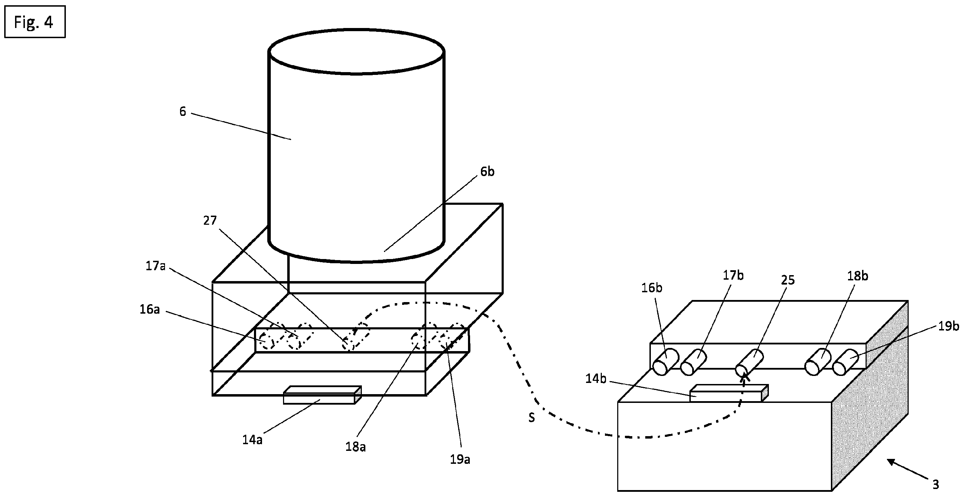

Die Akku-Schnittstelle 22 enthält darüber hinaus ein erstes Kommunikationselement 25. Wie in den Figuren 2 und 4 gezeigt ist das erste Kommunikationselement 25 zwischen den elektrischen Anschlüssen 15b, d.h. zwischen den beiden Pluskontakten 16b, 17b sowie den beiden Minuskontakten 18b, 19b, positioniert.

Wie ebenfalls in Figur 1 gezeigt ist gemäß eines ersten Ausführungsbeispiels der vorliegenden Erfindung das erste Kommunikationselement 25 als Stecker ausgestaltet. Das als Stecker ausgestaltete erste Kommunikationselement 25 ist wiederum über eine Kommunikationsleitung mit ersten Transceiver 24 verbunden ist. Durch die Verbindung des ersten Kommunikationselements 25 mit dem ersten Transceiver 24 können Signale, Daten und Informationen ausgetauscht werden.

Das erste Kommunikationselement 25 dient im Wesentlichen zum Austauschen (d.h. Senden und Empfangen) von Kommunikationssignalen durch den Akkumulator 3 mit einem anderen Kommunikationspartner.

Gemäß eines weiteren Ausführungsbeispiels kann das erste Kommunikationselement 25 auch als Funkelement für eine drahtlose Kommunikation bzw. Funkübertragung ausgestaltet sein. Die drahtlose Kommunikation kann dabei auch als "wireless" Kommunikation bezeichnet werden.

Wie in Figur 1 gezeigt enthält die Werkzeugmaschine 2 einen zweiten Transceiver 26. Wie auch der erste Transceiver 24 dient der zweite Transceiver 26 zum Senden und Empfangen von Daten und Informationen in Form von elektrischen Signalen. Der erste und zweite Transceiver 24, 26 sind korrespondierend zueinander ausgestaltet, sodass eine Kommunikation in Form von einem Signalaustausch möglich ist.

Wie ebenfalls in Figur 1 angedeutet ist der zweite Transceiver 26 an der Steuereinrichtung 10 der Werkzeugmaschine 2 positioniert. Entsprechend einer alternativen Ausführungsform kann der zweite Transceiver 26 auch an einer andere Stelle der Werkzeugmaschine positioniert sein und durch eine Leitung mit der Steuereinrichtung zum Austausch von Signalen und Daten verbunden sein.

Wie in Figur 3 und 4 gezeigt enthält die Werkzeugmaschine-Schnittstelle ein zweites Kommunikationselement 27, welches zwischen den elektrischen Anschlüssen 15a der Werkzeugmaschine-Schnittstelle 13, d.h. zwischen den beiden Pluskontakten 16a, 17a sowie den beiden Minuskontakten 18a, 19a, positioniert. Das zweite Kommunikationselement 27 ist über eine Leitung so mit dem zweiten Transceiver 26 verbunden, dass Signale zwischen dem zweiten Transceiver 26 und dem zweiten Kommunikationselement 27 ausgetauscht werden können.

Wie ebenfalls in Figur 3 angedeutet ist gemäß des ersten Ausführungsbeispiels der vorliegenden Erfindung das zweite Kommunikationselement 27 als Buchse ausgestaltet. Das als Buchse ausgestaltete zweite Kommunikationselement 27 korrespondiert zu dem als Stecker ausgestalteten ersten Kommunikationselement 25, sodass das als Stecker ausgestaltete erste Kommunikationselement 25 eine Steckverbindung mit dem als Buchse ausgestalteten zweiten Kommunikationselement 27 eingehen kann. Durch eine Verbindung des ersten Kommunikationselements 25 mit dem zweiten Kommunikationselement 27 können Signale, Daten und Informationen zwischen der Steuerungseinrichtung 23 des Akkumulators 3 und der Steuereinrichtung 10 der Werkzeugmaschine 2 ausgetauscht bzw. kommuniziert werden. Bei der Kommunikation zwischen der Werkzeugmaschine 2 und dem Akkumulator 3 kann es sich entweder um eine bidirektionale Kommunikation oder aber auch eine um eine uni-direktionale bzw. mono-direktionale Kommunikation handeln. Im Falle einer uni-direktionalen bzw. monodirektionalen Kommunikation werden lediglich Signale, Daten und Informationen von der Steuerungseinrichtung 23 des Akkumulators 3 zu der Steuereinrichtung 10 der Werkzeugmaschine 2 gesendet.

Gemäß eines weiteren Ausführungsbeispiels kann auch das zweite Kommunikationselement 17 als Funkelement für eine drahtlose Kommunikation bzw. Funkübertragung ausgestaltet sein. Die drahtlose Kommunikation kann dabei auch als "wireless" Kommunikation bezeichnet werden.

Für das Ausführungsbeispiel, dass sowohl das erste als auch das zweite Kommunikationselement 27 als Funkelement für eine drahtlose Kommunikation bzw. Funkübertragung ausgestaltet sind, findet der Austausch von Signalen, Daten und Informationen von der Steuerungseinrichtung 23 des Akkumulators 3 zu der Steuereinrichtung 10 der Werkzeugmaschine 2 in Form einer Funkverbindung statt. Bei der Funkverbindung kann es sich um eine Bluetooth, WLAN, ZigBee, NFC (Near Field Communication), Wibree oder WiMAX im Radiofrequenzbereich sowie IrDA (Infrared Data Association), optischer Richtfunk (FSO) und Li-Fi (light fidelity) im infraroten bzw. optischen Frequenzbereich handeln.

Figur 1 zeigt das System 1 mit der Werkzeugmaschine 2 und dem Akkumulator 3 in einem verbundenen Zustand, wobei der Akkumulator 3 als Energieversorgung durch die Werkzeugmaschine-Schnittstelle 13 wiederlösbar mit der Akku-Schnittstelle 22 der Werkzeugmaschine 2 verbunden ist. In diesem Zustand sind sowohl die jeweiligen Plus- 16a, 16b, 17a, 17b und Minuskontakte 18a, 18b, 19a, 19b als auch das erste und zweite Kommunikationselement 25, 27 miteinander verbunden. Wenn sich sowohl die Werkzeugmaschine 2 als auch der Akkumulator 3 jeweils in einem Aktivierungsmodus (auch Aktivierungs- oder Betriebszustand) befindet, kann beispielsweise als eine Funktion des Akkumulators 3 elektrische Energie von dem Akkumulator 3 zu der Werkzeugmaschine 2 gelangen. Darüber hinaus kann beispielsweise als eine Funktion der Werkzeugmaschine 2 sich der als Elektromotor ausgestaltete Antrieb drehen und dadurch ein Drehmoment erzeugen.

Zur Durchführung des Verfahrens für eine Kommunikation zwischen einem ersten Teilnehmer und einem zweiten Teilnehmer befinden sich der Akkumulator 3 sowie die Werkzeugmaschine 2 in einem verbundenen Zustand.

Der Akkumulator 3 ist dabei der erste Teilnehmer und die Werkzeugmaschine 2 ist der zweite Teilnehmer des Kommunikationsverfahrens. Alternativ kann eine Ladevorrichtung als zweiter Teilnehmer des Kommunikationsverfahrens verwirklicht sein.

Mit Hilfe des ersten Transceiver 24 wird ein Signal erzeugt und an das erste Kommunikationselement 25 gesendet. Bei dem Signal kann es sich beispielsweise um den Ladezustand (State of Charge = SoC) der Energiespeicherzellen 21 handeln. Das erste Kommunikationselement 25 leitet wiederum das Signal an das zweite Kommunikationselement 27 weiter. Von dem zweiten Kommunikationselement 27 gelangt das Signal über die Leitung an den zweiten Transceiver 26. Der zweite Transceiver 26 leitet das empfangene Signal schließlich an die Steuereinrichtung 10 der Werkzeugmaschine 2 weiter. Mit Hilfe der in dem Signal enthaltenen Informationen kann die Steuereinrichtung 10 eine oder mehrere Funktionen der Werkzeugmaschine 2 beibehalten oder entsprechend abändern.

Die Steuerungseinrichtung des Akkumulators 3 steuert dabei beispielsweise die Art und Anzahl der Signale sowie die Frequenz des Aussendens der Signale. So kann zum Beispiel ein relativ einfaches Überwachungssignal in regelmäßigen Abständen von dem ersten Transceiver 24 des Akkumulators 3 an den zweiten Transceiver 26 der Werkzeugmaschine 2 gesendet werden, um der Werkzeugmaschine 2 anzuzeigen, dass sich der Akkumulator 3 beispielsweise weiterhin in einem funktionsfähigen Zustand befindet.

Das von dem ersten Transceiver 24 gesendete Signal enthält dabei einen ersten Bestandteil B1 eines Datensatzes sowie einen zweiten Bestandteil B2 eines Datensatzes. Der erste Bestandteil B1 des Datensatzes ist dabei in Form von Nutzdaten und der zweite Bestandteil B2 des Datensatzes ist in Form einer Redundanz ausgestaltet.

Um zu überprüfen, ob von dem ersten Transceiver 24 des Akkumulators 3 übermittelten und vom dem zweiten Transceiver 26 der Werkzeugmaschine 2 empfangenen Signale fehlerfrei und/oder vollständig sind, wird mit Hilfe der Steuereinrichtung 10 der Werkzeugmaschine 2 eine Prüfsumme zu dem empfangenen Signal bestimmt. Zur Bestimmung der Prüfsumme wird eine zyklische Redundanzprüfung verwendet.

Wenn durch die Bestimmung der Prüfsumme das von dem zweiten Transceiver 26 empfangene Signal als fehlerfrei und vollständig bewertet wird, kann die Steuereinrichtung 10 der Werkzeugmaschine 2 den Betriebsmodus der Werkzeugmaschine 2 unverändert beibehalten. Bei dem Betriebsmodus kann es sich beispielsweise um das Erzeugen eines bestimmten Drehmoments durch den Antrieb 7 bei einer vorbestimmten Drehzahl handeln. Alternativ kann eine Änderung oder Anpassung des Betriebsmodus der Werkzeugmaschine 2 durch das von dem zweiten Transceiver 26 fehlerfrei und vollständig empfangene Signal bewirkt werden. So kann beispielsweise eine Änderung des Betriebsmodus der Werkzeugmaschine 2 in der Form geschehen, dass die Drehzahl des Antriebs 7 der Werkzeugmaschine 2 aufgrund des empfangenen Signals um einen gewissen Betrag reduziert bzw. nur noch eine geringere Maximaldrehzahl für den Antrieb 7 als bisher zulässig sein wird.

Des Weiteren wird von dem zweiten Transceiver 26 der Werkzeugmaschine 2 ein zweites Signal an den ersten Transceiver 24 des Akkumulators 3 gesendet, wenn das von dem zweiten Transceiver 26 empfangene Signal als fehlerfrei und vollständig bewertet worden ist. Das zweite Signal dient dabei als Bestätigungssignal oder Quittierungssignal (oder auch als Bestätigungsmeldung oder Quittierungsmeldung bezeichnet), durch welches dem ersten Teilnehmer bestätigt wird, dass nach Bestimmen einer Prüfsumme kein Fehler in dem ersten Bestandteil B1 des ersten Signals feststellbar und das Signal korrekt sowie vollständig übermittelt worden ist. Aufgrund dieses zweiten Signals wird dem ersten Transceiver 24 des Akkumulators 3 mitgeteilt, dass das gesendete Signal fehlerfrei und vollständig von dem zweiten Transceiver 26 der Werkzeugmaschine 2 empfangen wurde. Ein wiederholtes Aussenden des ersten Signals von dem ersten an den zweiten Transceiver 24, 26 ist somit nicht notwendig.

Wenn jedoch durch die Bestimmung der Prüfsumme das von dem zweiten Transceiver 26 empfangene Signal als fehlerhaft und/oder unvollständig bewertet ist, wird das als fehlerhaft und/oder unvollständig empfangene Signal in einer Speichereinrichtung der Werkzeugmaschine 2 gespeichert.

Des Weiteren wird kein zweites Signal als Bestätigungssignal bzw. Quittierungssignal von dem zweiten Transceiver 26 an den ersten Transceiver 24 gesendet. Wenn nach einer vorbestimmten zweiten Zeitdauer kein zweites Signal als Bestätigungssignal bzw. Quittierungssignal von dem zweiten Transceiver 26 an den ersten Transceiver 24 des Akkumulators 3 gesendet ist, sendet der erste Transceiver 24 erneut ein erstes Signal an den zweiten Transceiver 26 der Werkzeugmaschine 2. Das erneut gesendete erste Signal ist dabei identisch zu dem ersten Signal, welches zuvor fehlerhaft und/oder unvollständig von dem ersten Transceiver 24 an den zweiten Transceiver 26 gesendet wurde. Wenn das erste Signal dieses Mal fehlerfrei und vollständig von dem zweiten Transceiver 26 empfangen wurde, sendet der zweite Transceiver 26 nun ein zweites Signal als Bestätigungsmeldung oder Quittierungsmeldung an den ersten Transceiver 24.

Wenn von der Steuerungseinrichtung 23 des Akkumulators 3 nach einer zweiten vorbestimmten Zeitdauer ermittelt wird, dass kein zweites Signal von dem zweiten Transceiver 26 der Werkzeugmaschine 2 bei dem ersten Transceiver 24 des Akkumulators 3 empfangen wurde, wird durch die Steuerungseinrichtung 23 des Akkumulators 3 veranlasst, dass der Akkumulator 3 von einem ersten Betriebszustand (auch Betriebsmodus genannt) in einen zweiten Betriebszustand eingestellt wird. Bei dem ersten Betriebszustand kann es sich dabei um einen Aktivierungszustand und bei dem zweiten Betriebszustand kann es sich um einen Deaktivierungszustand handeln. In dem Aktivierungszustand wird unter anderem elektrische Energie von den Energiespeicherzellen 21 des Akkumulators 3 zur Verfügung gestellt, sodass in einem verbundenen Zustand der Akkumulator 3 die Werkzeugmaschine 2 mit elektrischer Energie versorgen kann. In dem Deaktivierungszustand wird hingegen keine elektrische Energie von dem Akkumulator 3 zur Verfügung gestellt und folglich die Werkzeugmaschine 2 auch nicht mehr mit elektrischer Energie versorgt.

Alternativ oder in Ergänzung hierzu veranlasst die Steuerungseinrichtung 23 des Akkumulators 3, dass ein entsprechendes drittes Signal von dem ersten Transceiver 24 des Akkumulators 3 an den zweiten Transceiver 26 der Werkzeugmaschine 2 gesendet wird. Durch das dritte Signal wird die Werkzeugmaschine 2 mit Hilfe der Steuereinrichtung 10 von einem ersten Betriebszustand in einen zweiten Betriebszustand gestellt. Bei dem ersten Betriebszustand kann es sich dabei um einen Aktivierungszustand und bei dem zweiten Betriebszustand kann es sich um einen Deaktivierungszustand handeln. In einem Aktivierungszustand wird unter anderem ein Drehmoment durch den Antrieb 7 der Werkzeugmaschine 2 erzeugt und in dem Deaktivierungszustand wird hingegen kein Drehmoment mehr durch den Antrieb 7 der Werkzeugmaschine 2 erzeugt. Alternativ kann auch durch die Steuereinrichtung 10 der Werkzeugmaschine 2 selbst veranlasst werden, dass die Werkzeugmaschine 2 von einem ersten Betriebszustand (d.h. Aktivierungszustand) in einen zweiten Deaktivierungszustand (d.h. Deaktivierungszustand) gestellt wird, wenn nach einer vorbestimmten Zeitdauer kein erstes Signal oder kein erstes Signal fehlerfrei und vollständig von dem ersten Transceiver 24 des Akkumulators 3 empfangen wird.

Gemäß einer weiteren alternativen Ausführungsform kann es auch möglich sein, dass die Steuereinrichtung 10 der Werkzeugmaschine 2 ein entsprechendes Signal von dem zweiten Transceiver 26 an den ersten Transceiver 24 gesendet wird, wodurch die Steuerungseinrichtung 23 den Akkumulator 3 von einem ersten Betriebszustand (d.h. Aktivierungszustand) in einen zweiten Deaktivierungszustand (d.h. Deaktivierungszustand) gestellt wird.

Entsprechend einer weiteren alternativen Ausführungsform kann es auch möglich sein, dass die Steuereinrichtung 10 der Werkzeugmaschine 2 ein entsprechendes Signal von dem zweiten Transceiver 26 an den ersten Transceiver 24 gesendet wird, wodurch die Steuerungseinrichtung 23 den ersten Transceiver 24 veranlasst ein erstes Signal erneut an den zweiten Transceiver 26 zu senden.

Dadurch, dass bisher und anscheinend weiterhin ausschließlich fehlerhafte oder unvollständige Signale von dem Akkumulator 3 an die Werkzeugmaschine 2 gesendet werden, ist anzunehmen, dass eine Fehlfunktion oder Störung bei dem Akkumulator 3 besteht. Eine sichere Fortführung der Versorgung der Werkzeugmaschine 2 mit elektrischer Energie durch den Akkumulator 3 ist ggf. nicht mehr gegeben.

Als Konsequenz hieraus wird durch die Werkzeugmaschine 2 veranlasst, dass die Werkzeugmaschine 2 entweder vollständig von einem Aktivierungszustand in einen Deaktivierungszustand oder teilweise von einem Aktivierungszustand in einen Deaktivierungszustand eingestellt wird.

Bei einer Einstellung in einen vollständigen Deaktivierungszustand sind alle Funktionen der Werkzeugmaschine 2 deaktiviert. Im Gegensatz dazu sind in einem teilweisen Deaktivierungszustand sind nur bestimmte Funktionen der Werkzeugmaschine 2 deaktiviert.

Wie bereits vorstehend beschrieben ist in dem vorliegenden Ausführungsbeispiel sowie in den Figuren der ersten Teilnehmer mit dem ersten Transceiver 24 durch den Akkumulator 3 und der zweite Teilnehmer mit dem zweiten Transceiver 26 durch die Werkzeugmaschine 2 verwirklicht bzw. ausgestaltet. Es ist im Sinne der vorliegenden Erfindung auch zu verstehen, dass der erste Teilnehmer mit dem ersten Transceiver durch die Werkzeugmaschine 2 und der zweite Teilnehmer mit dem zweiten Transceiver 26 durch den Akkumulator 3 verwirklicht bzw. ausgestaltet ist.

Alternativ und in den Figuren nicht dargestellt kann es sich bei dem ersten Teilnehmer mit dem ersten Transceiver 24 um den Akkumulator 3 und bei dem zweiten Teilnehmer mit dem zweiten Transceiver um eine Ladevorrichtung für den Akkumulator 3 handeln.

Es ist auch möglich, dass der ersten Teilnehmer mit dem ersten Transceiver durch die Ladevorrichtung und der zweite Teilnehmer mit dem zweiten Transceiver durch den Akkumulator 3 verwirklicht bzw. ausgestaltet ist.

### Bezuaszeichenliste

- 1: System
- 2: Werkzeugmaschine
- 3: Akkumulator
- 4: Gehäuse der Werkzeugmaschine
- 5: Werkzeugaufnahme
- 6: Handgriff
- 6a: erstes Ende des Handgriffs
- 6b: zweites Ende des Handgriffs
- 7: Antrieb
- 8: Getriebevorrichtung
- 9: Antriebswelle
- 10: Steuereinrichtung
- 11: Werkzeug
- 12: Fussvorrichtung
- 13: Werkzeugmaschine-Schnittstelle
- 14a: mechanische Anbindungskomponente der Werkzeugmaschine
- 14b: mechanische Anbindungskomponente des Akkumulators
- 15a: elektrische Anschlüsse der Werkzeugmaschine
- 15b: elektrische Anschlüsse des Akkumulators
- 16a: erster Pluskontakt der Werkzeugmaschine
- 16b: erster Pluskontakt des Akkumulators
- 17a: zweiter Pluskontakt der Werkzeugmaschine
- 17b: zweiter Pluskontakt des Akkumulators
- 18a: erster Minuskontakt der Werkzeugmaschine
- 18b: erster Minuskontakt des Akkumulators
- 19a: zweiter Minuskontakt der Werkzeugmaschine
- 19b: zweiter Minuskontakt des Akkumulators
- 20: Akku-Gehäuse
- 20a: Vorderseite des Akku-Gehäuses
- 20b: Rückseite des Akku-Gehäuses
- 20c: Oberseite des Akku-Gehäuses
- 20d: Unterseite des Akku-Gehäuses
- 20e: linke Seitenwand des Akku-Gehäuses
- 20f: rechte Seitenwand des Akku-Gehäuses
- 21: Energiespeicherzelle
- 22: Akku-Schnittstelle
- 23: Steuerungseinrichtung
- 24: erster Transceiver
- 25: erstes Kommunikationselement
- 26: zweiter Transceiver
- 27: zweites Kommunikationselement

- B1: erster Bestandteil des Signals
- B2: zweiter Bestandteil des Signals
- S1: erste Speichereinrichtung der Werkzeugmaschine
- S2: zweite Speichereinrichtung des Akkumulators

## Patentansprüche

1. Verfahren für eine Kommunikation zwischen einem ersten Teilnehmer () mit einem ersten Transceiver (24) und einem zweiten Teilnehmer () mit einem zweiten Transceiver (26), wobei der erste Teilnehmer beispielsweise in Form eines Akkumulators (3) und der zweite Teilnehmer beispielsweise in Form einer Werkzeugmaschine (2) oder einer Ladevorrichtung ausgestaltet ist, und wobei der Akkumulator (3) wahlweise wiederlösbar mit der Werkzeugmaschine (2) oder Ladevorrichtung verbindbar ist,
**gekennzeichnet durch** die Verfahrensschritte
- Aussenden wenigstens eines ersten Signals von dem ersten Transceiver (24) zu dem zweiten Transceiver (26), wobei das Signal wenigstens einen ersten Bestandteil (B1) eines Datensatzes sowie einen zweiten Bestandteil (B2) eines Datensatzes enthält;
- Aussenden eines zweiten Signals von dem zweiten Transceiver (26) an den ersten Transceiver (24), wenn nach Bestimmen einer Prüfsumme kein Fehler in dem ersten Bestandteil (B1) des ersten ausgesendeten und empfangenen Signals feststellbar ist;
- Aussenden des ersten Signals von dem ersten Transceiver (24) an den zweiten Transceiver (26), wenn nach Ablauf einer ersten vorbestimmten Zeitdauer kein zweites Signal von dem ersten Transceiver (24) empfangen wird;
- Einstellen des ersten Teilnehmers von einem ersten Betriebszustand in einen zweiten Betriebszustand, wenn nach einer zweiten vorbestimmten Zeitdauer kein erstes Signal von dem zweiten Transceiver (26) empfangen wird oder wenn nach einer dritten vorbestimmten Zeitdauer kein zweites Signal von dem ersten Transceiver (24) empfangen wird; und/oder
- Aussenden eines dritten Signals von dem ersten Transceiver (24) an den zweiten Transceiver (26) zum Einstellen des zweiten Teilnehmers von einem ersten Betriebszustand in einen zweiten Betriebszustand, wenn nach einer zweiten vorbestimmten Zeitdauer kein erstes Signal von dem zweiten Transceiver (26) empfangen wird oder wenn nach einer dritten vorbestimmten Zeitdauer kein zweites Signal von dem ersten Transceiver (24) empfangen wird.

2. Verfahren für eine Kommunikation nach Anspruch 1,
**dadurch gekennzeichnet, dass** eine zyklische Redundanzprüfung zum Bestimmen einer Prüfsumme verwendbar ist.

3. Verfahren für eine Kommunikation nach Anspruch 1 oder 2,
**dadurch gekennzeichnet, dass** der erste Bestandteil (B1) des Datensatzes in Form von Nutzdaten und der zweite Bestandteil des Datensatzes in Form einer Redundanz ausgestaltet ist.

4. Verfahren für eine Kommunikation nach wenigstens einem der Ansprüche 1 bis 3,
**dadurch gekennzeichnet, dass** es sich bei dem ersten Betriebszustand um einen Aktivierungsmodus und bei dem zweiten Betriebszustand um einen Deaktivierungsmodus handelt.

5. System (1) zur Durchführung eines Verfahrens für eine Kommunikation zwischen einem ersten und zweiten Teilnehmer (3, 2) nach wenigstens einem der Ansprüche 1 bis 4, wobei der erste Teilnehmer (3) eine Steuerungseinrichtung (23) und wenigstens einem ersten Transceiver (24) und der zweite Teilnehmer (2) eine Steuereinrichtung (10) und wenigstens einem zweiten Transceiver (26) enthält, wobei in einem verbundenen Zustand Signale zwischen dem ersten und zweiten Transceiver (24, 26) übermittelbar sind.

6. System (1) nach Anspruch 5
**dadurch gekennzeichnet, dass** die Kommunikation zwischen dem ersten und zweiten Teilnehmer (3, 2) auf einer drahtlosen Datenübertragungstechnologie basiert.

7. System (1) nach Anspruch 5,
**dadurch gekennzeichnet, dass** die Kommunikation zwischen dem ersten und zweiten Teilnehmer (3, 2) auf einer drahtgebundenen Datenübertragungstechnologie basiert.

8. System (1) nach wenigstens einem der Ansprüche 5 bis 7,
**dadurch gekennzeichnet, dass** der erste Teilnehmer (3) in Form eines Akkumulators und der zweite Teilnehmer (2) in Form einer von dem Akkumulator mit elektrischer Energie versorgten Werkzeugmaschine ausgestaltet ist.

9. System (1) nach wenigstens einem der Ansprüche 5 bis 7,
**dadurch gekennzeichnet, dass** der erste Teilnehmer (3) in Form eines Akkumulators und der zweite Teilnehmer (2) in Form einer Ladevorrichtung zum Versorgen des Akkumulators mit elektrischer Energie ausgestaltet ist.
